# EUROPÄISCHE PATENTANMELDUNG

(11) **EP 2 479 215 A1**
(43) Veröffentlichungstag der Anmeldung: **25.07.2012**
(21) Anmeldenummer: 11152056.5
(22) Anmeldetag: 25.01.2011
(51) Int. Cl.: C08L 63/00, B29B 15/12, B29C 70/02, B32B 27/38

(54) **Verfahren zur Herstellung eines Verbundmaterials**

(71) Anmelder: Bayer MaterialScience AG, 51368 Leverkusen (DE)
(72) Erfinder: Die Erfindernennung liegt noch nicht vor

(57) **Zusammenfassung**

Ein Verfahren zur Herstellung eines Verbundmaterials umfasst die Schritte: a) Bereitstellen einer Dispersion von Carboxylgruppen umfassenden Kohlenstoffnanoröhren in einem Epoxidharz, wobei die Carboxylgruppen umfassenden Kohlenstoffnanoröhren durch Reaktion von Kohlenstoffnanoröhren mit einer Reaktionsmischung umfassend HNO₃ erhalten werden; b) Hinzfügen eines Härters; c) Einbringen der Dispersion aus Schritt a) in eine Form; und d) Aushärten der Dispersion aus Schritt a). Das Epoxidharz in Schritt a) umfasst ein Bisphenol A-Epoxidharz. Der Gehalt an Carboxylgruppen umfassenden Kohlenstoffnanoröhren in der Dispersion aus Schritt a) beträgt ≥ 1 Gewichts-% bis ≤ 10 Gewichts-%, bezogen auf das Gesamtgewicht der Dispersion. Die Erfindung betrifft weiterhin die Verwendung einer zuvor erwähnten Dispersion zur Herstellung eines Verbundmaterials.

## Beschreibung

Die vorliegende Erfindung betrifft Verfahren zur Herstellung eines Verbundmaterials unter Einsatz einer Dispersion von Carboxylgruppen umfassenden Kohlenstoffnanoröhren in einem Epoxidharz, wobei die Carboxylgruppen umfassenden Kohlenstoffnanoröhren durch Reaktion von Kohlenstoffnanoröhren mit einer Reaktionsmischung umfassend HNO₃ erhalten werden. Die Erfindung betrifft weiterhin die Verwendung einer solchen Dispersion zur Herstellung eines Verbundmaterials.

Kohlenstoffnanoröhren (carbon nanotubes, CNTs) sind für ihre außergewöhnlichen Eigenschaften bekannt. So beträgt beispielsweise deren Festigkeit das ungefähr 100-fache des Stahls, deren thermische Leitfähigkeit ist etwa so groß wie die von Diamant, ihre thermische Stabilität reicht bis hoch zu 2800 °C im Vakuum und deren elektrische Leitfähigkeit kann ein Vielfaches der Leitfähigkeit von Kupfer betragen. Diese strukturbedingten Charakteristika sind auf molekularer Ebene allerdings häufig nur dann zugänglich, wenn es gelingt, Kohlenstoffnanoröhren homogen zu verteilen und einen möglichst großen Kontakt zwischen den Röhren und dem Medium herzustellen, also diese mit dem Medium verträglich und somit stabil dispergierbar zu machen.

Hinsichtlich elektrischer Leitfähigkeit ist es weiterhin erforderlich, ein Netzwerk an Röhren auszubilden, in dem sich diese im Idealfall nur an den Enden berühren beziehungsweise ausreichend nahe kommen. Hierbei sollten die Kohlenstoffnanoröhren möglichst vereinzelt, das heißt agglomeratfrei, nicht ausgerichtet und in einer Konzentration vorliegen, bei der sich ein solches Netzwerk gerade eben ausbilden kann, was sich durch den sprunghaften Anstieg der elektrischen Leitfähigkeit in Abhängigkeit von der Konzentration an Kohlenstoffnanoröhren widerspiegelt (Perkolationsgrenze).

Auch zum Erreichen verbesserter mechanischer Eigenschaften von Kompositen wie zum Beispiel in reaktiven Harzen wie Epoxiden beobachtet, ist eine exzellente Dispergierung und Vereinzelung der Kohlenstoffnanoröhren wünschenswert, da größere Agglomerate zu Bruchstellen führen (Zhou, eXPRESS Polym. Lett. 2008, 2, 1, 40-48) und dann eher eine Verschlechterung der mechanischen Eigenschaften solcher Komposite beobachtet wird.

Vor diesem Hintergrund existieren verschiedene Lösungsansätze zur effizienten Dispergierung von CNTs in reaktiven Harzen, wobei eine Möglichkeit die chemische Oberflächenfunktionalisierung der zu dispergierenden Kohlenstoffnanoröhren ist. So beschreibt WO 2010/102732 A1 ein Verbundmaterial umfassend Epoxypolymere, Kohlenstoffnanoröhren und gegebenenfalls Härtern, wobei die Kohlenstoffnanoröhren durch simultane Behandlung mit Sauerstoff, Ozon und Wasser in der Gasphase oxidiert werden.

Weiterhin wird dort ein Verfahren zur Herstellung eines solchen Verbundmaterials beschrieben, bei dem ozonierte CNTs mit einem Epoxidharz vermischt werden und die Mischung unter hohen Scherkräften zu einem homogenen CNT-Epoxidharz-Masterbatch dispergiert wird. Gegebenenfalls werden zum Masterbatch Härter und zusätzliches Epoxidharz hinzugefügt. Die Dispersion wird weiter mechanisch vermischt, entgast und gehärtet, wobei ein CNT-Epoxidharzverbundwerkstoff gebildet wird.

Im Stand der Technik wird beschrieben, dass die direkte Zugabe von CNTs zu Epoxidharzen zu einem unerwünschten Viskositätsanstieg des Harzes führt. Ein Beispiel um dieses zu umgehen ist die Patentanmeldung US 2010/0143701 A1, welche ein Verfahren zur Herstellung eines CNTverstärkten Faserverbundpolymers offenbart. Hierbei wird eine Dispersion von CNTs in einem Lösungsmittel auf eine Faseroberfläche aufgetragen und das Lösungsmittel anschließend entfernt. Als weiterer Schritt wird diese CNT-bedeckte Oberfläche mit einem Polymer beschichtet.

Im Zusammenhang mit einem Ausführungsbeispiel von US 2010/0143701 A1 wird diskutiert, dass für Proben mit 4% CNT-Anteil im Epoxidharz bereits Verarbeitungsschwierigkeiten aufgrund der hohen Viskosität auftreten. Nach Ansicht dieser Anmelder könnte dieses ein Hinweis auf die Existenz einer Obergrenze für den Gehalt an direkt hinzugefügten CNTs in Epoxidharzen darstellen. Weiterhin wird beschrieben, dass bei Gehalten von über 1 Gewichts-% CNTs die CNT-Epoxidharzmischung eine deutlich erhöhte Viskosität zeigt, so dass in der Herstellung der Verbundmaterialien Porositäten eingeführt werden können. Solche Defekte führen aber zu verschlechterten mechanischen Eigenschaften.

Für Fertigungsmethoden wie Harzinjektionsverfahren ("resin transfer molding", RTM) oder Harztränkungsverfahren ("resin infusion molding", RIM) stellt eine hohe Viskosität des Harzes aufgrund der dann auftretenden Druckerhöhung weiterhin eine Einschränkung dar. Schließlich weisen höherviskose Harze ferner den Nachteil auf, dass feine Strukturen in einer Form möglicherweise nicht getreu wiedergegeben werden können.

Aus mechanischen und/oder elektrischen Gründen wäre ein höherer CNT-Anteil in Verbundmaterialien dennoch wünschenswert.

Die vorliegende Erfindung hat sich daher die Aufgabe gestellt, ein Verfahren zur Herstellung eines CNT-Epoxidharz-Verbundmaterials bereitzustellen, bei dem ohne die vorgenannten Probleme aufgrund zu hoher Viskosität Epoxidharze mit einem höheren Anteil an CNTs verarbeitet werden können.

Die Aufgabe wird erfindungsgemäß gelöst durch ein Verfahren zur Herstellung eines Verbundmaterials, umfassend die Schritte:
a) Bereitstellen einer Dispersion umfassend funktionalisierte Kohlenstoffnanoröhren in einem ersten Epoxidharz;
b) Hinzufügen eines Härters zur Dispersion aus Schritt a);
c) Einbringen der Dispersion aus Schritt b) in eine Form; und
d) Aushärten der Dispersion aus Schritt b).

Das Verfahren zeichnet sich dadurch aus, dass das erste Epoxidharz ein Bisphenol A-Epoxidharz umfasst und die funktionalisierten Kohlenstoffnanoröhren erhalten werden, indem Carboxylgruppen umfassende Kohlenstoffnanoröhren mit einem zweiten, ein Bisphenol A-Epoxidharz umfassenden Epoxidharz zur Reaktion gebracht werden, wobei die Carboxylgruppen umfassenden Kohlenstoffnanoröhren durch Reaktion von Kohlenstoffnanoröhren mit einer Reaktionsmischung umfassend HNO₃ erhalten werden.

Weiterhin sind das erste und das zweite Epoxidharz gleich oder verschieden sind und der Gehalt an funktionalisierten Kohlenstoffnanoröhren in der Dispersion aus Schritt a) beträgt ≥ 1 Gewichts-% bis ≤ 10 Gewichts-%, bezogen auf das Gesamtgewicht der Dispersion.

Die im erfindungsgemäßen Verfahren eingesetzten CNT/Epoxidharz-Dispersionen weisen bei den angegebenen CNT-Gehalten eine überraschend niedrige Viskosität auf. Im Vergleich zu unfunktionalisierten beziehungsweise lediglich Carboxylgruppen tragenden CNTs wird kein bedeutsamer Viskositätsanstieg und teilweise sogar eine Viskositätsabnahme beobachtet. Dieses gilt insbesondere für die Dispersionen im Schritt a), welche auch bei hohen Gehalten an derart funktionalisierten CNTs noch eine gute Verarbeitbarkeit zeigen.

So kann beispielsweise die Viskosität der in Schritt a) bereitgestellten Dispersion, bestimmt bei 23 °C und einem Geschwindigkeitsgefälle von 40 1/s gemäß EN ISO 3219 (Kegel-Platte-Viskosimeter), ≥ 90% bis ≤ 600%, ≥ 95% bis ≤ 400% oder ≥ 100% bis ≤ 250% der Viskosität des ersten Epoxidharzes (bestimmt gemäß der gleichen Methode) ohne die funktionalisierten Kohlenstoffnanoröhren betragen.

Die Kohlenstoffnanoröhren im erfindungsgemäßen Verfahren können in aggregierter (agglomerierter) Form und/oder in nicht aggregierter Form vorliegen. Agglomerate können selbstverständlich im Laufe des erfindungsgemäßen Verfahrens weiter zerkleinert werden.

Kohlenstoffnanoröhren im Sinne der Erfindung sind insbesondere alle einwandigen oder mehrwandigen Kohlenstoffnanoröhren vom Zylinder-Typ (zum Beispiel in Patenten von Iijima US 5,747,161; Tennant WO 86/03455), Scroll-Typ, Multiscroll-Typ, Cup-stacked Typ aus einseitig geschlossenen oder beidseitig offenen, konischen Bechern bestehend (zum Beispiel in Patent Geus EP 198558 und Endo US 7,018,601), oder mit zwiebelartiger Struktur. Bevorzugt sind mehrwandige Kohlenstoffnanoröhren vom Zylinder-Typ, Scroll-Typ, Multiscroll-Typ und Cup-stacked Typ oder deren Mischungen einzusetzen. Günstig ist es, wenn die Kohlenstoffnanoröhren vor einer Dispergierung ein Verhältnis von Länge zu Außendurchmesser von ≥ 5, bevorzugt ≥ 100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffnanoröhren werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Anders als bei den zwiebelartigen Strukturen (onion type structure) verlaufen die einzelnen Graphenbeziehungsweise Graphitschichten in diesen Kohlenstoffnanoröhren im Querschnitt gesehen offenbar durchgehend vom Zentrum der Kohlenstoffnanoröhren bis zum äußeren Rand ohne Unterbrechung. Dies kann zum Beispiel eine verbesserte und schnellere Interkalierung anderer Materialien im Röhrchengerüst ermöglichen, da mehr offene Ränder als Eintrittszone der Interkalate zur Verfügung stehen im Vergleich zu Kohlenstoffnanoröhren mit einfacher Scrollstruktur (Carbon 1996, 34, 1301-3) oder CNTs mit zwiebelartiger Struktur (Science 1994, 263, 1744-7).

In Schritt a) des Verfahrens wird eine Dispersion umfassend funktionalisierte Kohlenstoffnanoröhren in einem ersten Epoxidharz bereitgestellt. Diese Dispersion kann als Masterbatch-Dispersion angesehen werden. Daher weist diese Dispersion vorzugsweise keine Härter auf, die zu einem Aushärten des Epoxidharzes führen können.

Es ist erfindungsgemäß vorgesehen, dass das erste Epoxidharz ein Bisphenol A-Epoxidharz umfasst. Hierunter sind Monomere und Oligomere auf der Basis von Bisphenol A zu verstehen.

Beispielsweise kann es sich um monomeres oder oligomeres DGEBA (Diglycidether von Bisphenol A) gemäß der nachstehenden Formel handeln: 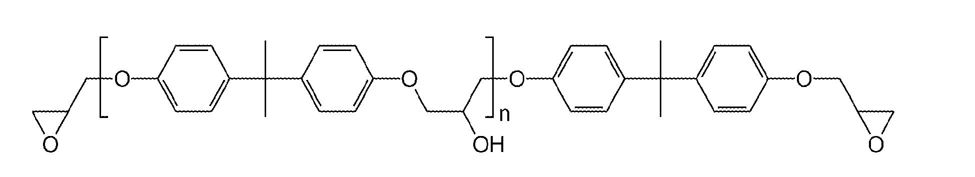 wobei n ≥ 0 bis ≤ 25, vorzugsweise ≥ 1 bis ≤ 5 beträgt. DGEBA lässt sich aus der Reaktion von Bisphenol A mit Epichlorhydrin erhalten.

Das erste Epoxidharz kann neben dem Bisphenol A-Epoxidharz noch weitere Epoxidharze oder Reaktivverdünner umfassen. Ein Beispiel für weitere Komponenten sind Harze mit 1,6-Hexandiol-diglycidether als Monomer. Es ist ebenfalls denkbar, dass Copolymere oder Cooligomere der Diglycidether von Bisphenol A und anderen Diolen oder Polyolen wie 1,6-Hexandiol das Bisphenol A-Epoxidharz konstituieren.

Weiterhin werden die funktionalisierten Kohlenstoffnanoröhren erhalten, indem Carboxylgruppen umfassende Kohlenstoffnanoröhren mit einem zweiten, ein Bisphenol A-Epoxidharz umfassenden Epoxidharz zur Reaktion gebracht werden. Hinsichtlich des zweiten Bisphenol A-Epoxidharzes gilt ebenfalls das zuvor Gesagte. Durch die Reaktion der Carboxylgruppen der CNTs mit dem Bisphenol A-Epoxidharz gelingt eine kovalente Anbindung des Harzes an die Kohlenstoffnanoröhren.

Im Schritt b) des Verfahrens wird der Dispersion ein Härter hinzugefügt. Geeignete Härter sind die für Epoxidharze üblicherweise eingesetzten Härter wie beispielsweise Aminhärter oder Anhydridbasierte Härter. Weiterhin können übliche Beschleuniger für die Aushärtung des Harzes und andere Additive wie Dispergierhilfsmittel, Benetzungsmittel oder Füllstoffe beigefügt werden.

Nach der Zugabe des Härters und gegebenenfalls anderer Komponenten kann der Gehalt an funktionalisierten CNTs beispielsweise ≥ 0,1 Gewichts-% bis ≤ 5 Gewichts-%, bezogen auf das Gesamtgewicht der Dispersion, betragen.

Es ist darüber hinaus vorgesehen, dass die Carboxylgruppen umfassenden Kohlenstoffnanoröhren durch Reaktion von Kohlenstoffnanoröhren mit einer Reaktionsmischung umfassend HNO₃ erhalten werden. Ohne auf eine Theorie festgelegt zu sein, wird angenommen, dass durch diesen nasschemischen Weg eine vergleichsweise hohe Anzahl von COOH-Gruppen auf der Oberfläche der CNTs erhalten wird. Die genaueren Details der Reaktionsführung können der Literatur entnommen werden. Falls erforderlich oder gewünscht, kann die Einführung der Carboxylgruppen auch mit zusätzlicher H₂SO₄ im Reaktionsgemisch erfolgen.

Die Härter umfassende CNT/Epoxidharz-Dispersion wird gemäß Schritt c) in eine Form eingebracht. Die Form kann eine offene oder eine geschlossene Form sein. Das Einbringen kann unter Überdruck oder Unterdruck erfolgen.

Das Aushärten der Dispersion gemäß Schritt d) kann innerhalb oder außerhalb der Form geschehen. Zusätzlich zur Zugabe von Härtern kann das Aushärten auch thermisch unterstützt werden.

Bevorzugte Ausgestaltungen der vorliegenden Erfindung werden nachfolgend geschildert. Sie können beliebig miteinander kombiniert werden, sofern sich aus dem Zusammenhang nicht eindeutig das Gegenteil ergibt.

In einer Ausführungsform des erfindungsgemäßen Verfahrens beträgt der Gehalt an funktionalisierten Kohlenstoffnanoröhren in der Dispersion aus Schritt a) ≥ 0,5 Gewichts-% bis ≤ 8 Gewichts-%, bezogen auf das Gesamtgewicht der Dispersion. Weiter bevorzugt sind Gehalte von ≥ 1,5 Gewichts-% bis ≤ 4 Gewichts-%.

In einer weiteren Ausführungsform des erfindungsgemäßen Verfahrens geschieht das Einbringen der Dispersion in Schritt c) unter einem Druck von ≥ 0,01 bar bis ≤ 10 bar. Bevorzugte Bereiche sind hierbei ≥ 0,05 bar bis ≤ 5 bar und mehr bevorzugte Bereiche ≥ 0,1 bar bis ≤ 3 bar. Die Druckangaben sind hierbei so zu verstehen, dass ein Druck von 1,013 bar dem normalen Atmosphärendruck entspricht. Niedrigere Drücke beim Einbringen stehen für einen Unterdruck und höhere Drücke für einen Überdruck. Die angegebenen Drücke beziehen sich auf die Drücke, die auf die Dispersion einwirken. So führt ein Überdruck dazu, dass die Dispersion in die For gepresst wird und ein Unterdruck dazu, dass die Dispersion in die Form hineingesogen wird.

In einer weiteren Ausführungsform des erfindungsgemäßen Verfahrens geschieht das Einbringen der Dispersion in Schritt c) mittels Harzinjektionsverfahren, Vakuum-unterstützten Harzinjektionsverfahren, Harzinfusionsverfahren und/oder Vakuum-unterstützten Harzinfusionsverfahren.

In einer weiteren Ausführungsform des erfindungsgemäßen Verfahrens weist die Dispersion in Schritt a) eine Viskosität bei 23 °C (40 s⁻¹) von ≥ 500 mPa s bis ≤ 30000 mPa s auf. Diese Viskosität wird mittels EN ISO 3219 bestimmt (zum Beispiel mit einem Kegel-Platte-Viskosimeter) und liegt vorzugsweise im Bereich von ≥ 500 mPa s bis ≤ 10000 mPa s, mehr bevorzugt von ≥ 500 mPa s bis ≤ 2000 mPa s.

In einer weiteren Ausführungsform des erfindungsgemäßen Verfahrens werden in Schritt c) innerhalb der Form befindliche Fasern mit der Dispersion aus Schritt a) kontaktiert.

Vorzugsweise sind die Fasern ausgewählt aus der Gruppe umfassend Glasfasern, Kohlefasern, Graphitfasern und/oder Polyamidfasern.

In einer weiteren Ausführungsform des erfindungsgemäßen Verfahrens liegen die zur Herstellung der Carboxylgruppen umfassenden Kohlenstoffnanoröhren eingesetzten Kohlenstoffnanoröhren in Form von Kohlenstoffnanoröhren-Agglomeraten mit einer durchschnittlichen Agglomeratgröße von ≥ 0,001 mm bis ≤ 10 mm vor.

Die agglomerierte Form ist diejenige Form von Kohlenstoffnanoröhren, in der sie in der Regel im Handel erhältlich sind. Es lassen sich mehrere Strukturtypen von Agglomeraten (siehe zum Beispiel Moy US 6,294,144) unterscheiden: die Vogelneststruktur ("bird's nest", BN), die Kammgarnstruktur ("combed yarn", CY) und die offene Netzstruktur ("open net", ON). Weitere Agglomeratstrukturen sind bekannt, zum Beispiel eine, bei der sich die Kohlenstoffnanoröhrchen in Form gebauschter Garne anordnen (Hocke, WO PCT/EP2010/004845). Weiterhin beschrieben sind über Flächen parallel ausgerichtete Nanoröhren in Form von Teppichen oder Wäldern, sogenannte "Forest"-Strukturen (zum Beispiel im Patent Dai US 6,232,706 und Lemaire US 7,744,793). Hierbei sind die benachbarten Röhren überwiegend parallel zueinander ausgerichtet. Die genannten Agglomeratformen können sowohl beliebig miteinander gemischt oder als Mischhybrid, das heißt verschiedene Strukturen innerhalb eines Agglomerates, verwendet werden.

Die Agglomerate weisen vorzugsweise eine durchschnittliche Agglomeratgröße von ≥ 0,02 mm auf. Dieser Wert kann generell mittels Laserbeugungsspektrometrie (ein Beispiel für ein Gerät ist der Mastersizer MS 2000 mit Dispergiereinheit Hydro S der Firma Malvern; in Wasser) ermittelt werden. Die Obergrenze der Agglomeratgröße beträgt vorzugsweise ≤ 6 mm. Mehr bevorzugt beträgt die durchschnittliche Agglomeratgröße ≥ 0,05 mm bis ≤ 2 mm und besonders bevorzugt ≥ 0,1 mm bis ≤ 1 mm.

Nach einer Dispergierung für die Dispersion in Schritt a) sollten die funktionalisierten CNTs in einer Agglomeratgröße von vorzugsweise ≤ 5 µm vorliegen.

In einer weiteren Ausführungsform des erfindungsgemäßen Verfahrens sind die zur Herstellung der Carboxylgruppen umfassenden Kohlenstoffnanoröhren eingesetzten Kohlenstoffnanoröhren mehrwandige Kohlenstoffnanoröhren mit einem durchschnittlichen äußeren Durchmesser von ≥ 3 nm bis ≤ 100 nm und einem Verhältnis von Länge zu Durchmesser von ≥ 5, vorzugsweise ≥ 100. Nach einer Dispergierung für die Dispersion in Schritt a) sollten die funktionalisierten CNTs vorzugsweise eine Länge von ≥ 200 nm bis ≤ 1000 nm und ein Verhältnis von Länge zu Durchmesser von ≥ 30 aufweisen.

Ein weiterer Gegenstand der vorliegenden Erfindung ist die Verwendung einer Dispersion von funktionalisierten Kohlenstoffnanoröhren in einem ersten Epoxidharz zur Herstellung eines Verbundmaterials, wobei das erste Epoxidharz ein Bisphenol A-Epoxidharz umfasst und die funktionalisierten Kohlenstoffnanoröhren erhalten werden, indem Carboxylgruppen umfassende Kohlenstoffnanoröhren mit einem zweiten, ein Bisphenol A-Epoxidharz umfassenden Epoxidharz zur Reaktion gebracht werden.

Die Carboxylgruppen umfassenden Kohlenstoffnanoröhren werden durch Reaktion von Kohlenstoffnanoröhren mit einer Reaktionsmischung umfassend HNO₃ erhalten. Das erste und das zweite Epoxidharz sind gleich oder verschieden und der Gehalt an funktionalisierten Kohlenstoffnanoröhren in der Dispersion ≥ 1 Gewichts-% bis ≤ 10 Gewichts-%, bezogen auf das Gesamtgewicht der Dispersion, beträgt.

Hinsichtlich näherer Erläuterungen und bevorzugter Ausgestaltungen wird zur Vermeidung von Wiederholungen generell auf die Ausführungen zum erfindungsgemäßen Verfahren verwiesen.

In einer Ausführungsform der erfindungsgemäßen Verwendung geschieht die Herstellung des Verbundmaterials mittels Harzinjektionsverfahren, Vakuum-unterstützten Harzinjektionsverfahren, Harzinfusionsverfahren und/oder Vakuum-unterstützten Harzinfusionsverfahren.

In einer weiteren Ausführungsform der erfindungsgemäßen Verwendung umfasst das Verbundmaterial zusätzlich Fasern.

Vorzugsweise sind die Fasern ausgewählt aus der Gruppe umfassend Glasfasern, Kohlefasern, Graphitfasern und/oder Polyamidfasern.

In einer weiteren Ausführungsform der erfindungsgemäßen Verwendung liegen die zur Herstellung der Carboxylgruppen umfassenden Kohlenstoffnanoröhren eingesetzten Kohlenstoffnanoröhren in Form von Kohlenstoffnanoröhren-Agglomeraten mit einer durchschnittlichen Agglomeratgröße von ≥ 0,001 mm bis ≤ 10 mm vor.

In einer weiteren Ausführungsform der erfindungsgemäßen Verwendung sind die zur Herstellung der Carboxylgruppen umfassenden Kohlenstoffnanoröhren eingesetzten Kohlenstoffnanoröhren mehrwandige Kohlenstoffnanoröhren mit einem durchschnittlichen äußeren Durchmesser von ≥ 3 nm bis ≤ 100 nm und einem Verhältnis von Länge zu Durchmesser von ≥ 5.

Die vorliegende Erfindung wird anhand der nachfolgenden Beispiele weiter erläutert, ohne jedoch hierauf beschränkt zu sein.

Glossar:
CNTs: Baytubes® C150HP der Firma Bayer MaterialScience. Diese sind mehrwandige Kohlenstoffnanoröhren mit einem mittleren Außendurchmesser von 13 nm bis 16 nm und einer Länge von über 1 µm. Sie liegen weiterhin als Agglomerate mit einer durchschnittlichen Teilchengröße von 0,1 mm bis 1 mm vor.

Epilox® A 19-00: Bisphenol-A-Epoxidharz der Firma Leuna-Harze mit 182-192 g/Epoxid-Äquivalent und einer Viskosität (DIN 53015) von 9-13 Pa s bei 25 °C.

Araldite® LY556: Bisphenol-A-Epoxidharz der Firma Huntsman mit einer Viskosität von 15300 mPa s bei 23 °C (D = 40; gemessen mit einem Kegel/Platte-Viskosimeter nach DIN 53019).

Epikote® RIM 135: Bisphenol-A-Epoxidharz der Firma Hexion mit 1,6-Hexandiol-diglycidether als weiterer Komponente und einer Viskosität von 1200 mPa s bei 23 °C (D = 40; gemessen mit einem Kegel/Platte-Viskosimeter nach DIN 53019).

Aradur® 917: Anhydrid-basierter Härter der Firma Huntsman.

DY 070: Imidazol-basierter Beschleuniger der Firma Huntsman

### Beispiel 1: Oxidation der CNTs

In einem Reaktor mit Kühler, Rührer und angeschlossener Gaswäscheeinheit wurde die benötigte Menge der CNTs (ca. 100 g) und Salpetersäure (ca. 500 mL; c(HNO₃) = 1 mol/L) vorgelegt. Die Menge an Säure wurde so gewählt, dass im Reaktor ein Flüssigkeitsüberstand von ca. 1-2 cm erkennbar war. Es wurde auf die Siedetemperatur (ca. 110 °C) erhitzt und die entstehenden nitrosen Gase (braune Farbe) waren erkennbar. Die nitrosen Gase wurden über eine Wascheinheit (verdünnte NaOH-Lösung) ausgewaschen und in dem Abluftkanal eingeleitet. Ein leichter N₂-Strom in der Zuleitung des Reaktors zum Wäscher verhinderte ein Zurückschlagen der NaOH-Lösung. Nach etwa 20 Minuten wurde abgekühlt und die gewaschenen CNT wurden abfiltriert und einer dreimaligen Wäsche mit Wasser unterzogen. Nach einer Wäsche mit Aceton wurde das Produkt bei 40-50 °C unter Vakuum über Nacht getrocknet.

Die Ausbeute an oxidierten CNTs betrug 90%, ihr Sauerstoffgehalt ca. 3,7 Atom-% (Elementaranalyse) und ihre Säurezahl 26,9 (Titration).

### Beispiel 2: Funktionalisierung der oxidierten CNTs

Die gemäß Beispiel 1 erhaltenen oxidierten CNTs (25,17 Gewichts-Teile) und Butylacetat (360,00 Gewichtsteile) wurden in einem Reaktor mit Kühler und Rührer vorgelegt und das Epoxidharz Epilox® A 19-00 (813,99 Gewichtsteile) sowie Triphenylphosphin als Katalysator (0,84 Gewichtsteile) hinzugegeben. Diese Reaktionsmischung wurde auf 80 °C erhitzt und anschließend für 30 Minuten entgast. Danach wurde die Reaktionsmischung unter leichtem Rühren über 16 Stunden bei 80 °C gehalten. Anschließend wurde die Reaktionsmischung abgekühlt, dekantiert und filtriert. Die filtrierten funktionalisierten CNTs wurden dreimal mit Butylacetat gespült und anschließend im Vakuum getrocknet.

Die Ausbeute an funktionalisierten CNTs betrug 90%, ihr Massenverlust gemäß Thermogravimetrie (TGA) ca. 7 Gewichts-% und ihre Säurezahl 21 (Titration).

### Beispiel 3: Herstellung von Dispersionen mit funktionalisierten CNTs

Die gemäß Beispiel 2 erhaltenen funktionalisierten CNTs werden mittels eines Dreiwalzwerks in das gemäß der nachstehenden Tabelle aufgeführte Epoxidharz eingearbeitet. Dabei durchlief die Dispersion in Summe 7 Zyklen mit stetig enger werden Spaltabständen der Walzen. Die Konzentration an funktionalisierten CNTs in der fertigen Dispersion beträgt am Ende 1 Gewichts-%.

Zum Vergleich ist weiterhin die Viskosität des entsprechenden Epoxidharzes mit nicht weiter modifizierten oder funktionalisierten CNTs angegeben. Die Viskositäten wurden mittels eines Kegel-Platte-Viskosimeters gemäß EN ISO 3219 bei 40 s⁻¹ und 23 °C bestimmt.

| Beispiel Nr. | Epoxidharz | Viskosität mit 1 Gewichts-% funktionalisierten CNTs gemäß Beispiel 2 | Vergleich: Viskosität des Epoxidharzes mit 1 Gewichts-% unmodifizierten CNTs |
|---|---|---|---|
| 3-1 | Araldite® LY556 | 14000-16000 mPa s | 23000-24000 mPa s |
| 3-2 | Epikote® RIM 135 | 900-1200 mPa s | 4300 mPa s |

Man erkennt zum Einen, dass die Zugabe der funktionalisierten CNTs die Viskosität des Epoxidharzes im Wesentlichen unverändert lässt und zum Anderen, dass im Vergleich hierzu Dispersionen mit unfunktionalisierten CNTs deutlich höhere Viskositäten aufweisen.

### Beispiel 4: Aushärtung einer Dispersion mit funktionalisierten CNTs

Eine gemäß Beispiel 3-1 erhältliche Dispersion von 1 Gewichts-% der laut Beispiel 2 funktionalisierten CNTs in Araldite® LY556 (160,5 g der Dispersion) wurde durch Zugabe weiteren

Epoxidharzes Araldite® LY556 (50,7 g) verdünnt. Anschließend wurde bei 40 °C bis 60 °C gerührt und im Vakuum entgast. Die Dispersion wurde mit dem Härter Aradur 917® (197,7 g) und dem Beschleuniger DY 070 (1,1 g) vermischt und unter Rühren im Vakuum entgast. Diese Mischung wurde anschließend in eine Form gegeben. Die Aushärtung erfolgte in zwei Stufen (4 Stunden bei 80 °C und 8 Stunden bei 120 °C).

## Patentansprüche

1. Verfahren zur Herstellung eines Verbundmaterials, umfassend die Schritte:
a) Bereitstellen einer Dispersion umfassend funktionalisierte Kohlenstoffnanoröhren in einem ersten Epoxidharz;
b) Hinzufügen eines Härters zur Dispersion aus Schritt a);
c) Einbringen der Dispersion aus Schritt b) in eine Form; und
d) Aushärten der Dispersion aus Schritt b);
**dadurch gekennzeichnet, dass**
das erste Epoxidharz ein Bisphenol A-Epoxidharz umfasst;
die funktionalisierten Kohlenstoffnanoröhren erhalten werden, indem Carboxylgruppen umfassende Kohlenstoffnanoröhren mit einem zweiten, ein Bisphenol A-Epoxidharz umfassenden Epoxidharz zur Reaktion gebracht werden,
wobei die Carboxylgruppen umfassenden Kohlenstoffnanoröhren durch Reaktion von Kohlenstoffnanoröhren mit einer Reaktionsmischung umfassend HNO₃ erhalten werden;
das erste und das zweite Epoxidharz gleich oder verschieden sind und
der Gehalt an funktionalisierten Kohlenstoffnanoröhren in der Dispersion aus Schritt a) ≥ 1 Gewichts-% bis ≤ 10 Gewichts-%, bezogen auf das Gesamtgewicht der Dispersion, beträgt.

2. Verfahren gemäß Anspruch 1, wobei der Gehalt an funktionalisierten Kohlenstoffnanoröhren in der Dispersion aus Schritt a) ≥ 0,5 Gewichts-% bis ≤ 8 Gewichts-%, bezogen auf das Gesamtgewicht der Dispersion, beträgt.

3. Verfahren gemäß Anspruch 1, wobei das Einbringen der Dispersion in Schritt c) unter einem Druck von ≥ 0,01 bar bis ≤ 10 bar geschieht.

4. Verfahren gemäß Anspruch 1, wobei das Einbringen der Dispersion in Schritt c) mittels Harzinjektionsverfahren, Vakuum-unterstützten Harzinjektionsverfahren, Harzinfusionsverfahren und/oder Vakuum-unterstützten Harzinfusionsverfahren geschieht.

5. Verfahren gemäß Anspruch 1, wobei die Dispersion in Schritt a) eine Viskosität bei 23 °C (40 s⁻¹) von ≥ 500 mPa s bis ≤ 30000 mPa s aufweist.(EN ISO 3219)

6. Verfahren gemäß Anspruch 1, wobei in Schritt c) innerhalb der Form befindliche Fasern mit der Dispersion aus Schritt a) kontaktiert werden.

7. Verfahren gemäß Anspruch 6, wobei die Fasern ausgewählt sind aus der Gruppe umfassend Glasfasern, Kohlefasern, Graphitfasern und/oder Polyamidfasern.

8. Verfahren gemäß Anspruch 1, wobei die zur Herstellung der Carboxylgruppen umfassenden Kohlenstoffnanoröhren eingesetzten Kohlenstoffnanoröhren in Form von Kohlenstoffnanoröhren-Agglomeraten mit einer durchschnittlichen Agglomeratgröße von ≥ 0,001 mm bis ≤ 10 mm vorliegen.

9. Verfahren gemäß Anspruch 1, wobei die zur Herstellung der Carboxylgruppen umfassenden Kohlenstoffnanoröhren eingesetzten Kohlenstoffnanoröhren mehrwandige Kohlenstoffnanoröhren mit einem durchschnittlichen äußeren Durchmesser von ≥ 3 nm bis ≤ 100 nm und einem Verhältnis von Länge zu Durchmesser von ≥ 5 sind.

10. Verwendung einer Dispersion von funktionalisierten Kohlenstoffnanoröhren in einem ersten Epoxidharz zur Herstellung eines Verbundmaterials,
**dadurch gekennzeichnet, dass**
das erste Epoxidharz ein Bisphenol A-Epoxidharz umfasst;
die funktionalisierten Kohlenstoffnanoröhren erhalten werden, indem Carboxylgruppen umfassende Kohlenstoffnanoröhren mit einem zweiten, ein Bisphenol A-Epoxidharz umfassenden Epoxidharz zur Reaktion gebracht werden,
wobei die Carboxylgruppen umfassenden Kohlenstoffnanoröhren durch Reaktion von Kohlenstoffnanoröhren mit einer Reaktionsmischung umfassend HNO₃ erhalten werden;
das erste und das zweite Epoxidharz gleich oder verschieden sind; und
der Gehalt an funktionalisierten Kohlenstoffnanoröhren in der Dispersion ≥ 1 Gewichts-% bis ≤ 10 Gewichts-%, bezogen auf das Gesamtgewicht der Dispersion, beträgt.

11. Verwendung gemäß Anspruch 10, wobei die Herstellung des Verbundmaterials mittels Harzinjektionsverfahren, Vakuum-unterstützten Harzinjektionsverfahren, Harzinfusionsverfahren und/oder Vakuum-unterstützten Harzinfusionsverfahren geschieht.

12. Verwendung gemäß Anspruch 10, wobei das Verbundmaterial zusätzlich Fasern umfasst.

13. Verwendung gemäß Anspruch 12, wobei die Fasern ausgewählt sind aus der Gruppe umfassend Glasfasern, Kohlefasern, Graphitfasern und/oder Polyamidfasern.

14. Verwendung gemäß Anspruch 10, wobei die zur Herstellung der Carboxylgruppen umfassenden Kohlenstoffnanoröhren eingesetzten Kohlenstoffnanoröhren in Form von Kohlenstoffnanoröhren-Agglomeraten mit einer durchschnittlichen Agglomeratgröße von ≥ 0,001 mm bis ≤ 10 mm vorliegen.

15. Verwendung gemäß Anspruch 10, wobei die zur Herstellung der Carboxylgruppen umfassenden Kohlenstoffnanoröhren eingesetzten Kohlenstoffnanoröhren mehrwandige Kohlenstoffnanoröhren mit einem durchschnittlichen äußeren Durchmesser von ≥ 3 nm bis ≤ 100 nm und einem Verhältnis von Länge zu Durchmesser von ≥ 5 sind.
